# EUROPEAN PATENT SPECIFICATION

(11) **EP 1 959 802 B1**
(45) Date of publication and mention of the grant of the patent: **19.08.2009**
(21) Application number: 06828084.1
(22) Date of filing: 11.12.2006
(51) Int. Cl.: A47J 37/07

(54) **VERTICAL HEARTH BARBECUE**
VERTIKALER HERDGRILL
BARBECUE A FOYER VERTICAL

(30) Priority: 13.12.2005 FR 0512726
(43) Date of publication of application: 27.08.2008
(73) Proprietor: AMORY, Antoine, 1300 Limal (BE)
(72) Inventor: AMORY, Antoine, 1300 Limal (BE)
(86) International application number: PCT/BE2006/000131
(87) International publication number: WO 2007/068065

(56) References cited:
- CA-C- 1 295 900
- DE-A1- 3 320 677
- DE-A1- 10 326 271
- FR-A1- 2 688 675
- US-A- 5 836 295
- US-A- 6 089 220

## Description

### Field of the invention

The invention relates to barbecues, in particular to barbecues with a vertical hearth.

### Description of the prior art

Two types of barbecues can easily be found on the market: the horizontal hearth barbecues and the vertical hearth barbecues.

The horizontal hearth barbecues have the disadvantage that the food is exposed to combustion gases. This can damage the sanitary quality of the food.

The vertical hearth barbecues overcome such disadvantage. They have however various drawbacks which make their practical use rather difficult.

One first disadvantage of the vertical hearth barbecues is that they are difficult to light up, because of the narrowness of the hearth (such narrowness is required for reducing the consumption of combustible). The combustible used in barbecues is indeed generally charcoal, the lighting of which is usually made by placing, in the bottom part of the hearth and through its entire length, a lighting compound which may be lit up easily with a match. The lighting compound is for example paper, firelighter cubes available on the market or tissue impregnated with a inflammable liquid (petrol, methanol, etc..). The positioning of the lighting compound in the bottom part of the hearth is not easy by reason of its narrowness. Pouring the charcoal into the hearth, on top of the previously lit lighting compound, often causes smothering of the lighting compound which therefore needs to be lit again from the bottom of the hearth, for example with a match or a lighter. Such lighting is particularly difficult by reason of the charcoal load present on top of the lighting compound, the difficulty to access it through the bottom grid of the hearth and its exposure to wind.

Another disadvantage of the known vertical hearth barbecues is the difficulty of regulating their lighting. Indeed, the lighting of the combustible being carried out from the bottom part of the hearth (as exposed here above), the first charcoal bits that are raised to incandescence are those located in the vicinity of the lighting compound. The incandescent zone created there through within the width of the hearth propagates then progressively to the entirety of the hearth, from bottom to top. Taking into account the relatively big height of the hearth in comparison with its width, such propagation is generally slow. The propagation speed is moreover sensitive to the size of the charcoal pieces: the smaller such size is, the slower will the propagation speed be. Such speed is also affected by wind. As a result, the time needed for the complete lighting of the hearth is hard to predict.

An additional disadvantage of the vertical hearth barbecues is that it is impossible to regulate the charcoal combustion rate. The combustion rate is indeed always maximal because the hearth is exposed to air through the entirety of its surface. A limitation of the quantity of oxygen required for combustion is not possible. Moreover, the combustion is activated by convection airstreams in the hearth and around it. Such a maximal combustion rate produces a high firepower and is thus an advantage for roasting food. However, it is a disadvantage if it is necessary to set the barbecue in a slow burning mode after having been lit or during its use, for example, for delaying the beginning of the food roasting phase or for allowing a pause between two successive roasting operations. In such an event, charcoal needs to be continuously loaded to the hearth in order to maintain it active until the cooking is resumed. The combustion rate being maximal, the consumption of charcoal is consequently excessive.

Most of the known vertical hearth barbecues rarely allow the use of charcoal or solid combustible bits having a size larger than the width of the hearth, notably wooden logs or wood or coal bricks. To overcome such disadvantage, it is proposed in document FR 2 688 675 to place on top of the hearth a combustion chamber whose width is larger than that of the hearth. Such known barbecue is especially dedicated to the use of large size wooden pieces. During use, the wood burns in the combustion chamber and the embers enter into the hearth whenever their size allows their entrance. Such known barbecues have the other disadvantages of the traditional vertical hearth barbecues, notably regarding the difficulty of lighting them up and the impossibility to regulate their combustion.

### Summary of the invention

The invention aims at overcoming the disadvantages of the known vertical hearth barbecues mentioned hereabove.

The invention aims more particularly at providing a barbecue of the vertical hearth kind which can be easily lit up even under windy conditions and is not influenced by the load of combustible, its nature, size and origin.

Another object of the invention is to provide a barbecue of the vertical hearth kind which can be regulated at any time, which allows a reduced consumption of combustible, and which can be set in a slow burning mode.

An additional object of the invention is to provide a barbecue which can use a variety of combustibles either from a quality or a size viewpoint.

It is also an objective of the invention to provide a barbecue of the vertical hearth kind in which the risk of having fats collected from the roasting contaminated with ashes from the hearth is reduced and even suppressed.

It is yet a further objective of the invention to provide a barbecue of the vertical hearth kind allowing an optimal positioning, in front of the hearth, of the cage grills used for roasting the food.

Consequently, the invention concerns a vertical hearth barbecue in which the hearth is surmounted by a combustion chamber, such barbecue being characterized in that the hearth and the combustion chamber are separated by a common partition which is removable.

In the barbecue according to the invention, the hearth is generally constituted, in a self known manner, of a vertical basket which has at least one of its side walls, either vertical or oblique, perforated. Usually, the basket is made of two perforated side walls, facing one another. The basket is designed for holding incandescent combustible. Such combustible can be for example charcoal, coal, or wood.

The combustion chamber is to be fed with combustible. In its inferior part, the combustion chamber has an opening through which it can communicate with the hearth. According to the invention, such opening can be closed by a removable partition.

For lightening the barbecue up, the partition is positioned in the closed position in order to isolate the hearth from the combustion chamber. The solid bulk combustible (for example charcoal) is poured in the combustion chamber and is lit with any well-known appropriate means, in general a lighting purpose product (paper, cloth soaked with liquid fuel, etc.) which has been mixed with the combustible. The amount of combustible introduced in the combustion chamber corresponds preferably to approximately the volume of the hearth.
As soon as the combustible is raised to incandescence, the removable partition is removed. Such removal can be achieved by taking the partition completely out, or by having it rotate around a horizontal axis, similarly to a trapdoor. Such removal enables the embers to drop into the hearth. One can then periodically refill combustible in the combustion chamber to compensate for the burnt combustible which is collected as ashes in the ash tray located under the hearth.

According to the barbecue of the invention, the side walls of the combustion chamber must be made of material capable of withstanding the heat generated by the combustion of the combustible. They can for example be made of firebricks or metal, for instance cast iron or steel. One prefers to have them made of metal sheets, preferably steel metal sheets (possibly stainless steel metal sheets).

The partition is usually a metal plate, for instance a cast iron or steel plate.

In a preferred embodiment of the barbecue according to the invention, the removable partition is perforated in order to allow the admission of air in the combustion chamber. In such an embodiment, the partition can be made for example of a metallic plate drilled with holes, woven wire or a metal grate. The use of metal grate is preferred. It can be made for example of cast iron, steel wire or molded steel. In such a preferred embodiment of the invention, the openings of the perforated partition must be adapted so as to hold the combustible in the combustion chamber, as well as the embers formed therein through the combustion.

In an advantageous alternative of the embodiment described hereabove, the openings of the perforated partition can be adjusted in order to throttle the air supply and the combustion in the combustion chamber. In such an alternative of the invention, the perforated partition can be designed similarly to the registers of heating devices which use solids as combustible.

As an alternative, the inlet of air into the combustion chamber can also be obtained through openings (possibly adjustable) made in the lateral or transversal side walls of said combustion chamber.

In yet another particular embodiment of the barbecue according to the invention, the combustion chamber is equipped with a removable lid. Such lid has the function of regulating the combustion for setting the barbecue in a slow burning mode. An opening leading into a flue equipped with an adjustable damper for regulating the combustion can advantageously be pierced in the lid. If the lid is shaped concavely, it can also additionally be used as a receptacle for maintaining the warm temperature of the food after it has been cooked.

In a specially preferred embodiment of the barbecue according to the invention, the combustion chamber is, in its transversal cross-section, wider than the hearth, and is connected to it via a hopper. Such embodiment according to the invention allows to combine the use of a narrow hearth (and as a consequence being economical regarding consumption of combustible) and a wide combustion chamber allowing the use of solid combustible having large dimensions, such as wooden logs, wooden blocks or compressed coal bricks. In addition, it facilitates the loading of the combustible and provides a more rapid propagation of the incandescent zone during lighting to the entirety of the combustible load.

In the specially preferred embodiment described hereabove, one can place a horizontal grid on the top edge of the combustion chamber. By doing so, an auxiliary barbecue of the horizontal type is obtained.

In an additional embodiment of the barbecue according to the invention, the hearth and the combustion chamber are compartmentalized into vertical contiguous sections with vertical or oblique dividing walls inserted transversally in the hearth and the combustion chamber. Such dividing walls are not perforated so as to isolate the compartments from one another. They are preferably removable. Such embodiment allows the.use of only part of the total capacity of the hearth by utilizing only certain compartments. The hearth volume can in such a way be adapted at will to the total surface of the foreseen cage grills (and thus to the total quantity of food to be roasted) and optimizes in such a way the productivity of the barbecue.

In a modified embodiment of the barbecue according to the invention, the hearth is divided in two juxtaposed longitudinal compartments by a vertical longitudinal dividing wall. Such dividing wall is preferably removable.

By comparison to the vertical hearth barbecues described in the prior art, the barbecue according to the invention combines the advantages of a great easiness for its lighting, a good energetic yield, and of a wide versatility regarding the choice of the type of solid combustible that can be used as well as its size. The presence of a removable lid on top of the combustion chamber brings the supplementary advantage of allowing regulation and/or the operation of the barbecue in a slow burning mode. The replacement of such lid by a horizontal grid allows the use of an auxiliary barbecue of the horizontal hearth type. Furthermore, the possibility of compartmentalizing the hearth allows the customization of the barbecue according to the invention to the quantity of food to be roasted.

The barbecue according to the invention normally has at least one drip pan located at the base level of the hearth for collecting the liquids generated by the roasting of the food. Such liquids can contain for example fat, oil or other substances which are normally part of the food composition or are used as cooking additives, for example for basting the food with a cooking brush. Such liquids can release harmful byproducts if they catch fire or are subject to degradation by reason of over-heating. It is thus of interest to move them away from the hearth as rapidly as possible after they are generated. It is also of interest to recover them for further use for basting the food with a cooking brush.
In a particular embodiment of the barbecue according to the invention, the drip pan surface slopes towards the exterior of the barbecue thereby leading the liquids into a removable collecting container which is located at a distance from the hearth. Such embodiment of the invention prevents over-heating and inflammation of the aforementioned liquids, avoids there through the formation of harmful products, and ensures a better dietetic quality thereof.
In such particular embodiment of the invention, the drip pan can advantageously swing around an essentially horizontal hinge, in such a manner that it can be tipped over along one perforated wall of the hearth, whilst the collected liquids can be eliminated independently by withdrawal of the collecting container. Such an arrangement of the drip pan and collecting container reduces the space required for storing the barbecue.

In another embodiment of the invention, the drip pan is covered by a grid which can also advantageously swing around a hinge similar to that described hereabove. When in use, the said grid can be positioned horizontally. Its role is to support the cage grills (see below) while letting the liquids drip through into the drip pan localized underneath, such drip pan sloping towards the exterior of the hearth. In such particular embodiment of the invention, the drip pan and the collecting container can be advantageously replaced by a tray of which the bottom part has a concave shape sloping towards the exterior of the hearth.

Similarly to the known barbecues of the vertical type, the barbecue according to the invention is normally equipped with one or more cage grills facing the hearth, which are designed for holding the food submitted to roasting. In a particular embodiment of the barbecue according to the invention, the cage grill can be moved relatively to the hearth (either in a parallel or non parallel manner with respect to it) for being brought closer to or moved further away from it and/or can be positioned for being set, in front of the hearth, in an essentially vertical or tilted position. For such purpose, in a particular embodiment of the barbecue according to the invention, the cage grill and the drip pan are designed in such a way that the cage grill lies on the drip pan via its anterior part and leans, in a standing vertical or tilted position, against an appropriate support. Such particular embodiment allows to modify at will the distance (in a parallel or non parallel manner with respect to the hearth) and/or the tilt of the grill cage (or parts thereof) and consequently to regulate the roasting within the cage grill. Such particular embodiment of the invention also allows the use of cage grills available on the market having variable shapes and dimensions, either without any modification, or by simple addition of a fixing device (see below) on their haft.

In a particularly advantageous embodiment of the invention, the support is made of a bar resting on two essentially parallel indented racks which are formed respectively by the top edges of two essentially vertical panels, set transversally with respect to the hearth. As an alternative, the bar may be immobilized on the top edges of said panels by magnetization. The cage grill leans loosely against the bar, for example via a haft which is fixed on the cage grill. Alternatively, the haft of the cage grill can be locked with the bar in a removable manner, by means of a removable device fixed on said haft and/or bar.

In the embodiment described hereabove, the two panels can advantageously swing around essentially vertical hinges in such a way that they can be collapsed along the side of a perforated wall of the hearth. In such embodiment, when the panels are shut along the side of the perforated wall of the hearth, they act as an obstacle to the admission of the air into the combustion chamber, resulting in the smothering of the combustion, for instance for setting the barbecue in a slow burning mode. Alternatively, the panels have, in their inferior part, an air vent with an adjustable opening for regulating the combustion.

In its various embodiments, the barbecue according to the invention combines a set of advantages including a great easiness for lighting the combustible load, a time duration for lighting the combustible load which is reduced and predictable, a wide versatility regarding the choice of the type of solid combustible that can be used as well as the size thereof, an optimal energetic yield and a reduced consumption of combustible, an improvement of the sanitary quality of the food obtained through the roasting (by avoiding for example overheating of the fat which as a result can be recovered), an efficient regulation of the roasting of the food and a minimal storage space requirement. The invention allows in addition to combine on one single apparatus, a barbecue of the vertical hearth type and a barbecue of the horizontal type.

The lay out of the cage grills leaning against a bar and lying via their anterior part on the drip pan surface sloping towards the exterior of the hearth or on a grid covering a tray having a concave shaped bottom surface sloping towards the exterior of the hearth, can additionally advantageously be combined with a vertical hearth filled with a combustible other than charcoal, like gas heated lava stones or an electric heating element.

### Bief description of the figures

The particularities and details of the invention will appear in the following description of the attached figures, which correspond to a particular embodiment of the invention.
Figure 1 is a view in perspective of a particular embodiment of the barbecue according to the invention;
Figure 2 shows the barbecue of Figure 1 as a vertical transversal cross-section according to plane II-II of Figure 1;
Figure 3 shows the barbecue of figure 1 as a vertical longitudinal cross-section according to plane III-III of figure 1;
Figure 4 is a view as a transversal horizontal cross-section according to plane IV-IV of figure 3;
Figure 5 shows a detail of the barbecue of figures 1 to 3, in perspective and large scale.
Figure 6 is a view in perspective of another particular embodiment of the barbecue according to the invention showing a removable partition made of two grated partitions rotating around their respective horizontal axis.

The figures are not drawn to scale.

In general, the same reference numbers designate the same elements.

### Detailed description of a preferred embodiment

The barbecue represented in the figures comprises a vertical hearth 1, surmounted by a combustion chamber 2.

The vertical hearth 1 comprises, in a self known manner, a basket having essentially a shape of a rectangular parallelepiped. The vertical side walls of basket 1 and its bottom side wall are made of steel wire mesh. Basket 1 is open at its top end 3.

The combustion chamber 2 is shaped as a rectangle parallelepiped, the width of which is larger than that of hearth 1. The vertical side walls of chamber 2 are made of non perforated steel metal sheets. Chamber 2 is open at its inferior end which is itself connected to the top end 3 of basket 1 through hopper 4 which is made of non perforated steel metal sheets.

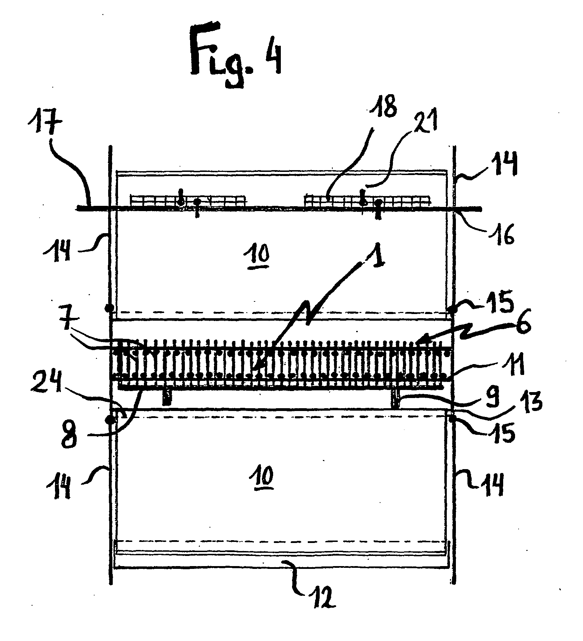

According to the invention, the barbecue comprises a grated partition 6 which can be positioned horizontally between the hearth 1 and the hopper 4. The grated partition 6 is removable. It is shaped essentially as a comb and is, for such purpose (fig 4), made of a plurality of parallel rods 7 fixed on a common cross rod 8. Handles 9 are fixed to common cross rod 8 for facilitating the insertion of the partition 6 between basket 1 and hopper 4.

Before using the barbecue shown in the figures, the grated partition 6 is positioned between basket 1 and hopper 4, and chamber 2 is loaded with appropriate combustible, for example charcoal, sieved wooden blocks or wood logs. The grated partition 6 holds the combustible load in chamber 2. A lighting compound, for example consisting of twigs, paper or commercial firelighter cubes, is then mixed with the combustible load. The combustible load is then lit up, while maintaining partition 6 positioned between basket 1 and combustion chamber 2. The openings.of grated partition 6 allow the inlet of air which is required for the combustion of the combustible load in chamber 2. When the combustible load is transformed into an accumulation of incandescent embers, one removes partition 6. As a result, the accumulated embers are released and fall down from chamber 2 into wire basket 1. Thereafter, combustion chamber 2 is filled up at regular time intervals with combustible, as and when the level of the embers gets lower in basket 1 as a consequence of the advancement of the combustion.

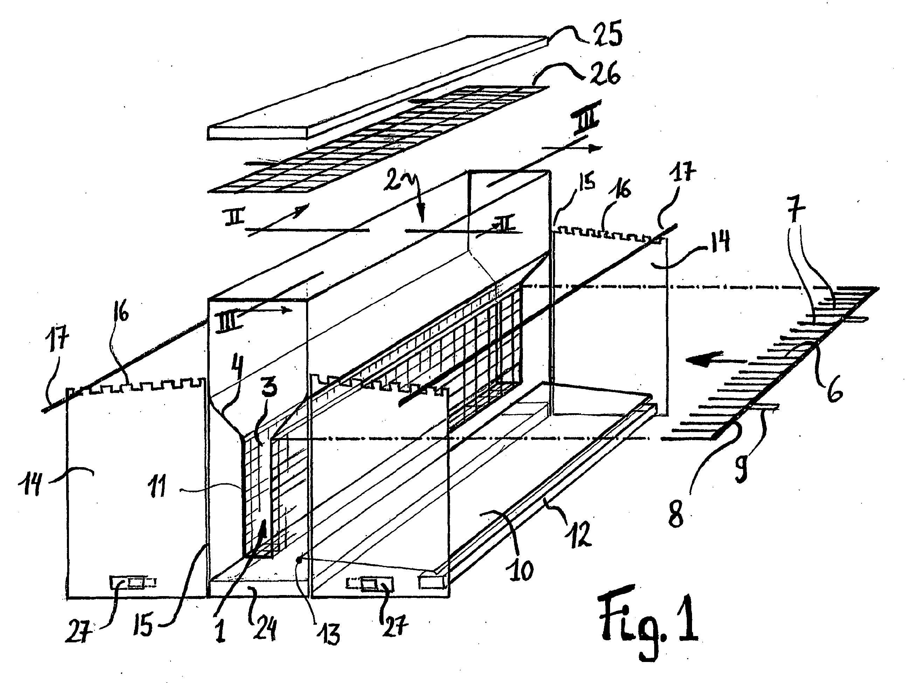

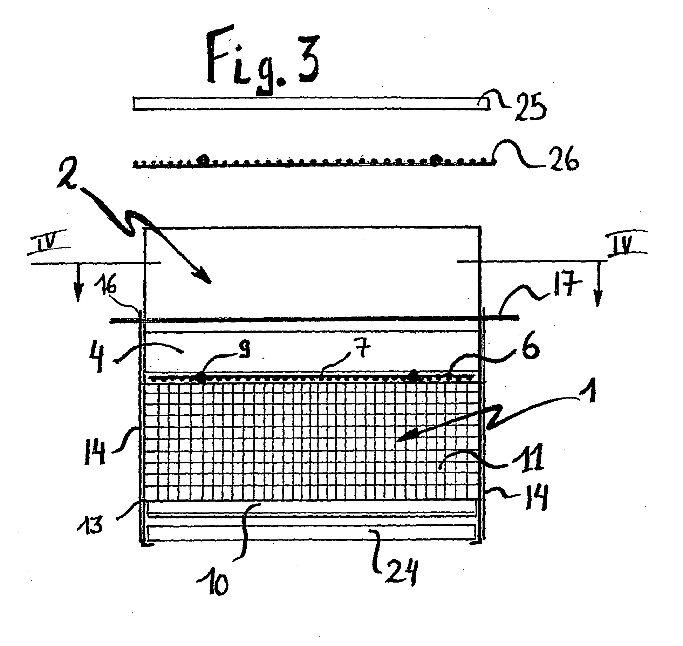

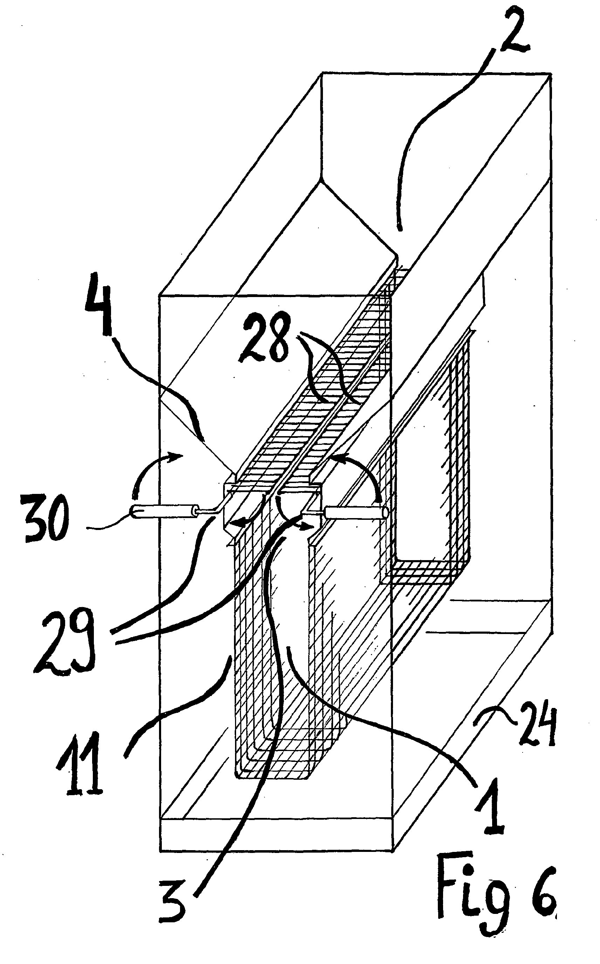

As an alternative to the preferred embodiment described here above, the removable partition, instead of being withdrawn entirely as shown in Figure 1 to 4, can be made of one or several grated partitions which can be positioned either in the open or closed position by rotation around a horizontal axis. As illustrated in Figure 6, the two grated partitions (28) shown in a closed position can be moved into the opened position through rotation around their respective horizontal axis (29) by lifting handles (30).

The ashes generated by full combustion of the embers pass through the bottom grate of basket 1 and drop into ash tray 24.

By laying the lid 25 (Fig. 1, 2 and 3) on top of the combustion chamber 2, the rate of combustion can be slowed down and the barbecue can be set in a low burning mode.

By replacing the lid 25 by a horizontal grid 26, a type of barbecue with a horizontal chamber is obtained additionally.

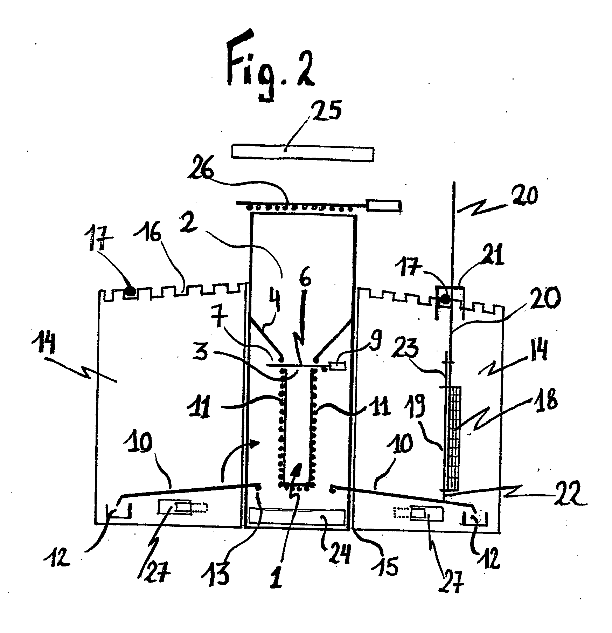

The schematic drawings of the barbecue shown in the figures 1 to 4 comprise two drip pans 10 which are placed respectively along the bottom ends of the two vertical longitudinal walls 11 of basket 1. The drip pans 10 slope towards the exterior of the basket in such a way that their lower ends are positioned above a collecting container 12. The function of the drip pans 10 is to collect the liquids generated by broiling the food, such liquids being constituted by fat, oil or other substances normally part of the food composition or used as cooking additives, for example for basting the food with a cooking brush. By using the sloping drip pans 10, the overheating of the aforementioned liquids is avoided since they are immediately moved away from the incandescent basket 1 and are collected in the collecting containers 12. Such an embodiment of the invention allows the recovery of dripping products (for example fat) of a better dietetic quality.
The drip pans 10 can be made of flat metal sheets. It is preferred to use corrugated or ribbed sheets for channeling the aforementioned liquids in the collecting containers 12.
The drip pans 10 must be located at a sufficient distance from the ash tray 24 for avoiding that the ashes from the hearth 1 drop on them and contaminate the liquids that are collected by them.
According to an advantageous characteristic of the barbecue shown in the figures, the drip pans 10 swing, via their upper end, around essentially horizontal hinges 13 (Fig.2), allowing one to tip them over along the vertical perforated walls 11 of basket 1. Such feature of the barbecue allows a reduction of the space required for its storage.

The barbecue shown in the figures 1 to 4 comprise additionally two pairs of vertical panels 14, that can swing around vertical hinges 15 for allowing them to be collapsed along the vertical walls 11 of the basket 1. The panels 14 fulfill two distinct technical functions. A first technical function consists in collapsing the barbecue for reducing space occupancy and facilitating its storage. A second function, particularly advantageous, consists in regulating the inlet of air needed for combustion in chamber 2. Such regulation is effectively realized depending on whether the panels 14 are widely open, completely collapsed along the sides 11 of basket 1 or in an intermediate position. By collapsing panels 14 along the sides 11 of basket 1, the barbecue is set in a slow burning mode. As an alternative, panels 14 can be perforated with adjustable vents 27.

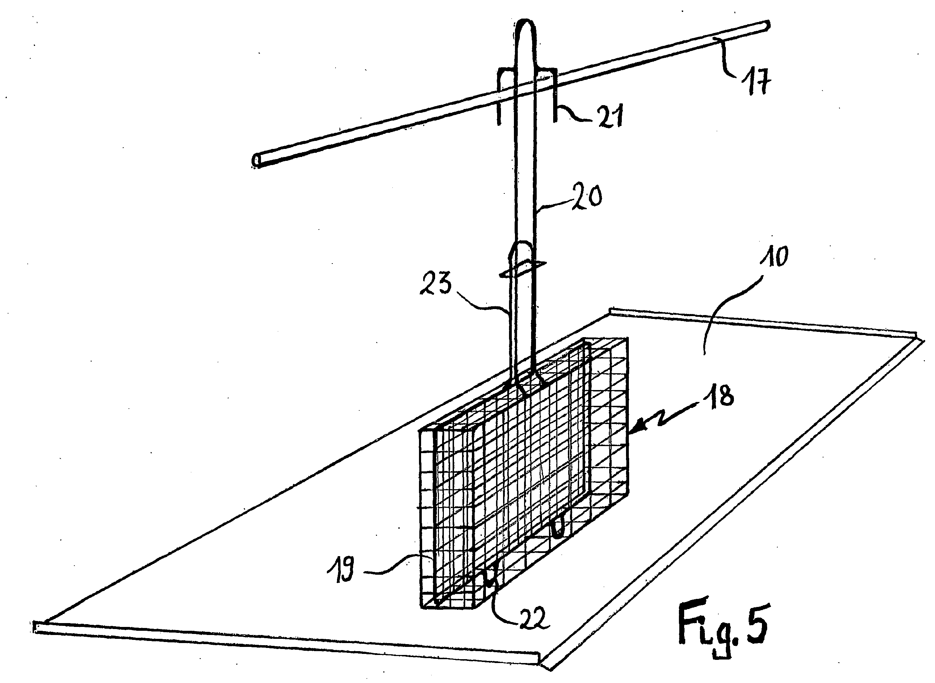

For using the barbecue according to the invention, the food is normally placed, in a self known manner, in a cage grill which is positioned in front of hearth 1 (figures 2, 4 and 5). One may use only one cage grill or several ones which can be positioned along each longitudinal side 11 of basket 1. The cage grill consists in a wired box comprising a wired casing 18 fixed to a haft 20 and a wired cover 19 fixed to haft 23. Also, the wired cover 19 is fitted with supports 22. When it is positioned in front of the basket 1 of the barbecue, the cage grill lies on the drip pan through its supports 22, and its haft 20 leans against a horizontal bar 17 which is slotted in two parallel indented racks 16 carved respectively within the top edges of the two panels 14 (figures 2, 4 and 5). A pair of hooks 21, fixed to haft 20, holds the cage grill against bar 17, preventing it from tilting over. The hooks 21 are not essential for the definition of the invention. They can as an alternative be replaced by any other appropriate holding device such as one or several clamps, one or several clips, an elastic fixing or an attachment through screws or bolts and nuts (non limitative example list) which can be added to the haft of any cage grill having an appropriate size and shape. By changing the position of bar 17 in the indented racks 16 and by modifying the position of the supports 22 on the drip pan 10, one can modify the inclination of the cage grill and the distance separating it from the hearth 1. The cage grill can furthermore be located in a parallel or oblique position with respect to the hearth. One can as a result regulate the roasting of the food located in the cage grill, for example by accelerating or slowing down the roasting rate or for carrying out a differentiated grilling rate on different locations of the surface of the cage grill.

Although it does not appear from the figures, the barbecue according to the invention can be equipped with at least one support for at least one spit (possibly motor driven), as ordinary mentioned for the vertical hearth barbecues. The spit can be horizontal and inserted in the panels 14 or vertical and suspended to a bracket attached to the hearth by sliding into a female recipient fitting, in a self known manner. The barbecue according to the invention can also be equipped with collapsible feet which can advantageously be fitted with wheels for allowing moving the barbecue easily.

## Claims

1. Barbecue having a vertical hearth (1) and a combustion chamber (2), in which the hearth (1) is surmounted by the combustion chamber (2), **characterized in that** the hearth (1) and the combustion chamber (2) are separated by a common partition, which is removable.

2. Barbecue according to claim 1, **characterized in that** the common partition (6) is perforated.

3. Barbecue according to claim 1 or 2, **characterized in that** the combustion chamber (2) is, in a cross-section, wider than the hearth (1).

4. Barbecue according to any one of claims 1 to 3 **characterized in that** it comprises a removable lid (25) which is placed on top of the combustion chamber (2) for regulating its combustion.

5. Barbecue according to any one of claims 1 to 4 **characterized in that** it comprises at least one removable vertical dividing wall inserted transversally in the combustion chamber (2) and vertical hearth (1).

6. Barbecue according to any one of claims 1 to 5, **characterized in that** it contains, in front of the hearth (1), a cage grill (18) that can be moved away from or closer to the hearth (in a parallel or non parallel manner with respect to it) and/or that can be placed in an essentially vertical or oblique position, in front of the hearth.

7. Barbecue according to any one of claims 1 to 6, **characterized in that** it comprises at least one removable drip pan for collecting fat.

8. Barbecue according to any one of claims 1 to 7, **characterized in that** it comprises panels (14) that swing around essentially vertical hinges (15), in such a way that they can be collapsed along a perforated wall (11) of the hearth (1) for regulating its combustion.

9. Barbecue according to any one of claims 1 to 8, **characterized in that** the panels (14) are equipped with adjustable vents (27).

## Patentansprüche

1. Grill mit einem vertikalem Feuerherd (1) und einer Verbrennungskammer (2) bei dem sich der Feuerherd (1)oberhalb der Verbrennungskammer (2) befindet und
**dadurch gekennzeichnet ist** und dass der Feuerherd (1) und die Verbrennungskammer (2)durch eine abmontierbare, gemeinsame Scheidewand voneinander getrennt sind.

2. Grill nach Anspruch 1 **dadurch gekennzeichnet dass** diese gemeinsame Scheidewand (6) durchlöchert ist.

3. Grill nach irgendeinem der Ansprüche 1 oder 2 **dadurch gekennzeichnet, dass** die Verbrennungskammer (2) einen breiteren Querschnitt hat als der des Feuerherdes (1).

4. Grill nach irgendeinem der Ansprüche 1 bis 3 **dadurch gekennzeichnet dass** er mit einem abnehmbaren Deckel (25)versehen ist, der sich auf der Verbrennungskammer (2) befindet und erlaubt, die Verbrennung zu regeln.

5. Grill nach irgendeinem der Ansprüche 1 bis 4 **dadurch gekennzeichnet dass** er mindestens eine abnehmbare vertikale Scheidewand hat, welche quer in der Verbrennungskammer (2) und im vertikalen Feuerherd (1)angebracht ist.

6. Grill nach irgendeinem der Ansprüche 1 bis 5 **dadurch gekennzeichnet dass** sich vor dem Feuerherd (1) ein Grillkorb (18) befindet der dem Feuerherd (1) angenähert oder entfernt werden kann (in paralleler oder nicht-paralleler Weise), und/oder in im wesentlichen vertikale oder geneigte Position vor dem Feuerherd (1)gestellt werden kann.

7. Grill nach irgendeinem der Ansprüche 1 bis 6 **dadurch gekennzeichnet dass** er mindestens eine abnehmbare Abtropfpfanne enthält um Fett aufzufangen.

8. Grill nach irgendeinem der Ansprüche 1 bis 7 **dadurch gekennzeichnet dass** er Platten (14) hat, welche auf im wesentlichen vertikal angeordneten Gelenken (15) in solcher Weise schwenken, dass diese entlang der perforierten Wand (11) des Feuerherdes (1) umgekippt werden können um die Verbrennung zu regulieren.

9. Grill nach irgendeinem der Ansprüche 1 bis 8 **dadurch gekennzeichnet dass** die Platten (14) mit verstellbaren Luftlöchern (27)ausgestattet sind.

## Revendications

1. Barbecue ayant un foyer vertical (1) et une chambre de combustion (2), dans lequel le foyer (1) est surmonté par la chambre de combustion (2), **caractérisé en ce que** le foyer (1) et la chambre de combustion (2) sont séparés par une cloison commune (6), qui est amovible.

2. Barbecue selon la revendication 1, **caractérisé en ce que** la cloison commune (6) est ajourée.

3. Barbecue selon la revendication 1 ou 2, **caractérisé en ce que** la chambre de combustion (2) est, en section transversale, plus large que le foyer (1).

4. Barbecue selon l'une quelconque des revendications 1 à 3, **caractérisé en ce qu'**il comprend un couvercle amovible (25) qui est posé sur la chambre de combustion (2) pour réguler sa combustion.

5. Barbecue selon l'une quelconque des revendications 1 à 4, **caractérisé en ce** en ce qu'il comprend au moins un panneau de compartimentation vertical amovible inséré transversalement dans la chambre de combustion (2) et le foyer (1).

6. Barbecue selon l'une quelconque des revendications 1 à 5, **caractérisé en ce qu'**il comprend, en regard du foyer (1), une cage grillagée (18) qui est déplaçable pour l'éloigner ou la rapprocher du foyer (parallèlement ou non par rapport à celui-ci) et/ou qui est orientable pour occuper une position sensiblement verticale ou oblique, face au foyer.

7. Barbecue selon l'une quelconque des revendications 1 à 6, **caractérisé en ce qu'**il comprend au moins une lèchefrite amovible pour récolter les graisses.

8. Barbecue selon l'une quelconque des revendications 1 à 7 **caractérisé en ce qu'**il comprend des panneaux (14) qui sont articulés sur des charnières sensiblement verticales (15) de manière qu'ils puissent être rabattus le long d'une paroi ajourée du foyer pour réguler sa combustion.

9. Barbecue selon l'une quelconque des revendications 1 à 8, **caractérisé en ce que** les panneaux (14) sont munis d'ouïes de ventilation (27).
